# EUROPÄISCHE PATENTANMELDUNG

(11) **EP 0 715 902 A1**
(43) Veröffentlichungstag der Anmeldung: **12.06.1996**
(21) Anmeldenummer: 94116974.0
(22) Anmeldetag: 27.10.1994
(51) Int. Cl.: B09C 1/06, B09B 3/00

(54) **Verfahren und Anlage zur thermischen Abtrennung von Schadstoffen aus kontaminiertem Behandlungsgut**

(71) Anmelder: Kettenbauer, Franz, Dipl.-Ing, D-79727 Murg (DE); Kreyenberg, Heiner, Dipl.-Ing. Dr., D-40885 Ratingen (DE)
(72) Erfinder: Kettenbauer, Franz, Dipl.-Ing, D-79727 Murg (DE); Kreyenberg, Heiner, Dipl.-Ing. Dr., D-40885 Ratingen (DE)
(74) Vertreter: Stenger, Watzke & Ring Patentanwälte

(57) **Zusammenfassung**

An einem Verfahren zur thermischen Abtrennung von organischen und/oder anorganischen Schadstoffen aus kontaminiertem Behandlungsgut wird vorgeschlagen, daß das Behandlungsgut auf einer gasdurchlässigen, kontinuierlich oder schrittweise vorwärts von einer Aufgabezone zu einer Entnahmezone bewegten Unterlage (20) flächig in einer vorgegebenen Schichtstärke ausgebreitet wird, daß durch die Schicht des Behandlungsgutes ausschließlich Heißdampf mit einer Temperatur ≧ 700°C und einem Dampfdruck zwischen 0,5 und 1,5 bar derart hindurchgeführt wird, daß durch die die Heißdampfbehandlung überlagernde Bewegung des Behandlungsgutes dieses in der Aufgabezone zunächst getrocknet wird und sodann in der nachfolgenden Reaktionszone die Schadstoffe sukzessive mit ansteigender Temperatur des Behandlungsgutes über ihren Siedepunkt erhitzt, verdampft und mit den Heißdampfbrüden abgeführt werden, und daß schließlich die Brüden in an sich bekannter Weise entstaubt (9) und kondensiert (10) werden, wobei das Kondensat in einem Drei-Phasen-Separator (24) in feste Rückstandsprodukte, Öle und eine wässrige Phase getrennt wird, die als Kesselspeisewasser zur Heißdampferzeugung verwendet wird.

Weiterhin wird eine Vorrichtung zur Durchführung des Verfahrens mit einer Beschickungseinheit (1-4), einer Bedampfungseinheit (5), einer Ausbringeinheit (6), einer Dampferzeugungseinheit (7,8) und einer Dampfverarbeitungseinheit angegeben.

## Beschreibung

Die Erfindung betrifft ein Verfahren zur thermischen Abtrennung von organischen und/oder anorganischen Schadstoffen aus kontaminiertem Behandlungsgut, wie Böden, Schlämmen, Walzenzunder und dgl., mit Heißgasen, die anschließend entstaubt, kondensiert und einer Kondensatreinigung unterzogen werden. Weiterhin betrifft die Erfindung eine Anlage zur Durchführung des Verfahrens.

Zur Reinigung von kontaminiertem Behandlungsgut ist aus der DE 43 03 722 C1 bekannt, das kontaminierte Material nach einer Vorbehandlung in einem beheizten Ofen, der als Drehrohrofen, Wirbelschichtofen oder Spiegelbildreaktor ausgebildet ist, zu erhitzen und während des Erhitzens mit zurückgeführten Heißgasen oder Heißdampf und mit Oxidationsmitteln zu behandeln. Die austretenden wasserdampfhaltigen Behandlungsgase werden sodann entstaubt und zu 80 bis 90 Vol.-% als Schleppgas in den Ofen zurückgeführt. Der restliche Teil der wasserdampfhaltigen Behandlungsgase wird einer Kondensation unterworfen, wobei die dabei gebildete flüssige Phase abgezogen und naßchemisch oder physikalisch von Schadstoffen befreit wird. Dabei ist nachteilig, daß durch die Behandlung im Ofen mit einer direkten oder indirekten Beheizung große Luftmengen in das Verfahren eingebracht werden, die sämtliche nachfolgende Behandlungsschritte stark belasten. Darüber hinaus läßt das bekannte Verfahren einen kontinuierlichen Betrieb nicht zu, da der Ofen jeweils neu mit dem Behandlungsgut beschickt und später entleert werden muß. Für die Verteilung des Behandlungsgutes im Inneren des Ofens sind aufwendige Einrichtungen wie Kettenkratzförderer erforderlich. Schließlich ist nachteilig, daß durch die Rückführung von 80 bis 90% der wasserdampfhaltigen kontaminierten Behandlungsgase in den Ofen hohe Korrosionsgefahren aufgrund des eingebrachten Dampf-Luft-Schadstoffgemisches, das eine aggressive Ofenatmosphäre darstellt, begründet werden.

Der Erfindung liegt in Anbetracht dieses Standes der Technik die Aufgabe zugrunde, ein Verfahren zur thermischen Abtrennung von organischen und/oder anorganischen Schadstoffen aus kontaminiertem Behandlungsgut derart zu verbessern, daß im Rahmen einer kontinuierlichen Verfahrensführung ohne Ofen unter Meidung eines hohen Luftüberschusses sämtliche Kontaminationen organischer und anorganischer Natur aus dem Behandlungsgut in wirtschaftlicher Weise entfernt werden können.

Die Aufgabe ist erfindungsgemäß dadurch gelöst, daß das Behandlungsgut auf einer gasdurchlässigen kontinuierlich oder schrittweise vorwärts von einer Aufgabezone zu einer Entnahmezone bewegten Unterlagen flächig in einer vorgegebenen Schichtstärke ausgebreitet wird, daß durch die Schicht des Behandlungsgutes ausschließlich Heißdampf mit einer Temperatur ≧ 700°C und einem Dampfdruck zwischen 0,5 und 1,5 bar derart hindurchgeführt wird, daß durch die die Heißdampfbehandlung überlagernde Bewegung des Behandlungsgutes dieses in der Aufgabezone zunächst getrocknet wird und sodann in der nachfolgenden Reaktionszone die Schadstoffe sukzessive mit ansteigender Temperatur des Behandlungsguts über ihren Siedepunkt erhitzt, verdampft und mit den Heißdampfbrüden abgeführt werden, und daß schließlich die Brüden in an sich bekannter Weise entstaubt und kondensiert werden, wobei das Kondensat in einem Drei-Phasen-Separator in feste Rückstandsprodukte, Öle und eine wässrige Phase getrennt wird, die als Kesselspeisewasser zur Heißdampferzeugung verwendet wird.

Mit dem erfindungsgemäßen Verfahren wird der Wärmeinhalt des Heißdampfes im kontinuierlichen Verfahrensablauf zunächst ausgenutzt, das Behandlungsgut in der Aufgabezone der Reaktionskammer zu trocknen und wird im weiteren Bewegungsweg das nunmehr trockene Behandlungsgut vom Heißdampf mit einer Temperatur ≧ 700°C beaufschlagt, um die Kontaminationen zu verflüchtigen. Bei den organischen Verunreinigungen, zum Beispiel PAK, MKW, CKW und dgl. liegen die Siedepunkte etwa zwischen 400°C und 500°C, wie dies auch bei den anorganischen Schadstoffen, wie Quecksilber, Chlor, Fluor und Schwefel gegeben ist, die in gelöster oder kristalliner Form vorliegen. Selbst leicht freisetzbare Zyanide lassen sich durch die Heißdampfbehandlung verflüchtigen. Eine separate Beheizung ist nicht erforderlich.

Vorzugsweise wird die Behandlung mit Heißdampf von 700°C und einem Druck von 1,5 bar durchgeführt, wobei die Schichtstärke auf zwischen 200mm und 500mm vorteilhafterweise eingestellt wird. Nach einer anschließenden Kühlung ist von Schadstoff befreites Behandlungsgut, also beispielsweise ein Reinboden, gegeben.

Als zweckmäßig hat sich beim erfindungsgemäßen Verfahren erwiesen, den Heißdampf von unten nach oben durch die Schicht des Behandlungsgutes hindurchzuleiten und die im Gegenstrom nach unten durch die gasdurchlässige Unterlage fallenden Feinststäube mittels eines parallelgeschalteten Förderbandes zu sammeln und dem Prozeß vor der Aufgabezone wieder zuzuführen. Diese werden im Stand der Technik aus dem Prozeß abgezogen, was nachteiligerweise eine Entsorgung erfordert. Um die Ergebnisse der Rückführung von Staub und Feinteilen zu verbessern, kann ein Agglomerieren oder Granulieren bis zu einer Korngröße von 10mm im Durchmesser durchgeführt werden.

Die nun mit Schadstoffen belasteten Heißdampfbrüden werden abgezogen, in an sich bekannter Weise entstaubt und kondensiert, wobei vorteilhafterweise der gewonnene Staub, ggf. nach einem Granulieren, Pelletieren oder Koagulieren in den Prozeß vor der Aufgabezone zurückgeführt wird. Das Kondensat aus den Kondensierung wird vorzugsweise in einem Drei-Phasen-Separator aufbereitet, wobei die wässrige Phase als Kesselspeisewasser zur Heißdampferzeugung verwendet wird.

Gemäß einem weiteren Vorschlag der Erfindung wird die bei der Kondensation entstehende Vakuumluft einem Adsorber zugeführt, wobei in vorteilhafterweise zur Adsorption Aktivkohle eingesetzt werden kann. Hierdurch werden aus der Luft Schadstoffe wie Chlor und Schwefel entfernt, so daß ein erheblicher Teil der Luft als Verbrennungsluft dem Brenner der Kesselanlage zugeführt werden kann.

Gemäß einer weiteren Ausgestaltung der Erfindung ist vorgeschlagen, das durch thermische Behandlung gereinigte Behandlungsgut anschließend einer Nachbehandlung mittels Prozeßmedien in einer Reaktorsäule zuzuführen. Die Reaktorsäule kann in einem parallelen Dampfkreislauf betrieben werden.

Insgesamt läßt sich das erfindungsgemäße Verfahren mit geringem wirtschaftlichen Aufwand durchführen und wird eine hohe Qualität der Schadstoffabtrennung auf thermischem Wege erzielt. Die hohe Qualität der Reinigung mit dem einfachen Dampfdurchströmungsverfahren durch die bewegte Schicht des Behandlungsgutes ist überraschend. Gegenüber herkömmlichen Verfahren wird eine gute Durchmischung von Behandlungsgut und Dampf erreicht und ist das Separieren der einzelnen Kontaminationen mit geringem Aufwand in einfacher Weise möglich. Große Abluftmengen werden dabei ebenso vermieden wie aufwendige Abgasreinigungsverfahren.

Zur vorrichtungsseitigen Lösung der zugrundeliegenden Aufgabe wird erfindungsgemäß eine Anlage vorgeschlagen, die aus einer Beschickungseinheit, einer Bedampfungseinheit, einer Ausbringeinheit für das Behandlungsgut, einem Dampferzeuger und einer Brüdenreinigung besteht, wobei die Bedampfungseinheit ein im wesentlichen gasdichtes Gehäuse mit einer Zuführschleuse und einer Ausbringschleuse umfaßt, zwischen denen ein gasdurchlässiges Transportband für das Behandlungsgut angeordnet ist, unter dem über die gesamte Fläche verteilte Zuführdüsen für Heißdampf angeordnet sind. Dabei kann unterhalb des Förderbandes für das Behandlungsgut ein zweites Förderband mit gegenläufiger Förderrichtung zum Auffangen und Austragen der Feinstmaterialien angeordnet sein, welche mittels eines Elevators wieder der Aufgabezone der Bedampfungseinheit zuführbar sind.

Weitere Einzelheiten, Merkmale und Vorteile der Erfindung ergeben sich aus der nachfolgenden Beschreibung der zugehörigen Zeichnung, in der verschiedene Ausführungsformen einer erfindungsgemäßen Anlage zur Durchführung einer thermischen Abtrennung von Schadstoffen aus kontaminiertem Boden dargestellt sind. In der Zeichnung zeigt:
- Fig. 1: ein Ablaufschema, in welchem die einzelnen Vorrichtungen zur Durchführung des Reingungsverfahrens schematisch dargestellt sind;
- Fig. 2: ein Ablaufschema für eine alternative Ausführungsform;
- Fig. 3: eine schematische Darstellung eines Ausführungsbeispiels für eine Bedampfungseinheit und
- Fig. 4: eine schematische Schnittdarstellung eines Seitenteils der Bedampfungseinheit gemäß Fig. 3

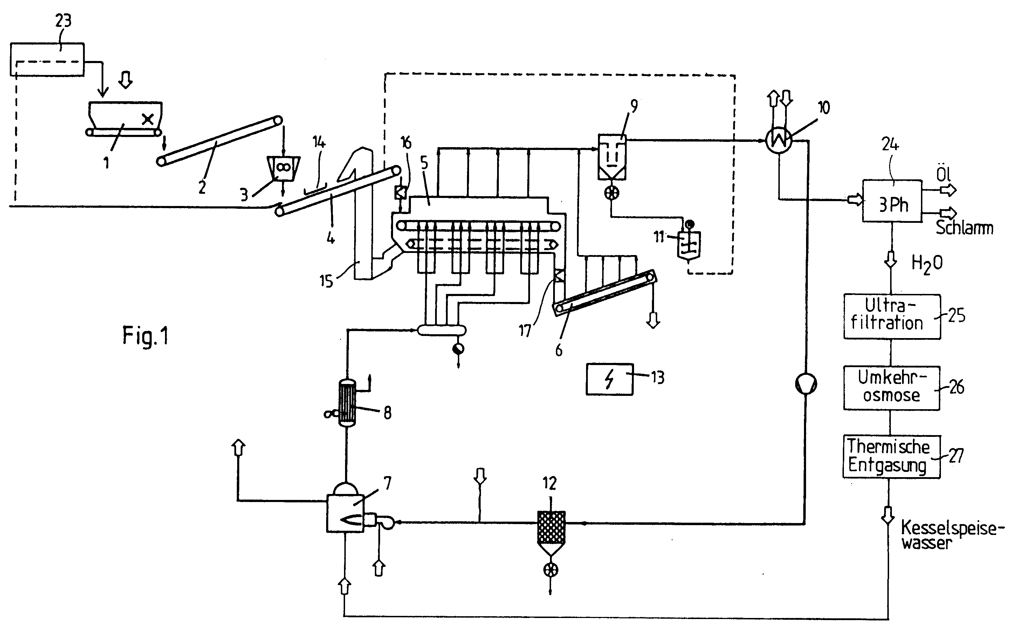

In Fig. 1 ist schematisch der Aufbau einer Reingungsanlage gezeigt. Ein vorzugsweise direkt von einem anliefernden Fahrzeug zu beladener Kastenbeschicker 1 dient der Aufnahme des zu reinigenden Gutes. Vom Kastenbeschicker 1 wird in an sich bekannter Weise über ein Förderband 2 ein Brecher 3 beliefert, in welchem das zu reinigende Gut auf eine Größe von vorzugsweise maximal 30 mm zerkleinert wird. Vom Brecher wird das zu reinigende Gut über ein weiteres Transportband 4, welches im gezeigtem Ausführungsbeispiel als Magnetband 14 ausgebildet ist, zu einer Bedampfungsvorrichtung 5 geführt. Im gezeigten Ausführungsbeispiel ist dem Kastenbeschicker ein Sieb 23 vorgeschaltet, welches das Feinmaterial direkt dem Transportband 4 zuführt. Wird das Sieb 23 nicht verwendet, kann alternativ auch das Transportband 2 als Magnetband ausgebildet werden.

Die Bedampfungsvorrichtung besteht aus einem dampfdurchlässigen Förderband 5, welches über eine Zugangsschleuse 16 mit Material beschickt wird. Die Schichtdicke läßt sich durch die Vorschubsgeschwindigkeit des Bandes 5 regeln. Unterhalb des Bandes 5 ist ein weiteres Förderband angeordnet, mit welchem durch das Band 5 durchfallendes Feinmaterial aus der Bedampfungsvorrichtung heraus einem Elevator 15 zugeführt wird, mittels welchem das Material in den Kreislauf zurückgeführt wird. Im gezeigten Ausführungsbeispiel fördert der Elevator 15 das Feinmaterial zurück auf das Transportband 4. Nach erfolgter Behandlung wird das gereinigte Gut über eine Ausgangsschleuse 17 einem Transportband 6 zugeleitet, welches im gezeigten Ausführungsbeispiel ein Kühlband ist. Über einen Dampfabzug wird Restdampf abgezogen und ebenfalls in den Kreislauf zurückgeführt. Im Anschluß an das Kühlband wird das gereinigte Gut zur Wiederverwertung bereitgestellt.

In einem Dampfkessel 7 wird Kesselspeisewasser mittels eines Brenners, welcher in einem Bereich von 1250°C arbeitet, bei einem Druck von vorzugsweise 1,5 bar auf etwa 145°C erwärmt. In einem Überhitzer 8 wird Dampf mit einer Temperatur von vorzugsweise 700°C erzeugt, welcher bei im wesentlichen gleichbleibenden Druck von zwischen 0,5 und 1,5 bar, einem Dampfverteiler zugeführt wird. Über den Dampfverteiler wird der Dampf in die Bedampfungsanlage 5 eingebracht und dort in den Bereich zwischen Obertrum und Untertrum des dampfdurchlässigen Förderbandes, die gesamte Fläche beaufschlagend, geführt. Somit wird sichergestellt, daß die auf dem Förderband befindliche Schicht von zu reinigendem Gut gleichmäßig von Dampf durchströmt wird. Bei diesem sogenannten Destillationsverfahren wird das Gut unter anderem vom KW, CKW, PAK, CI, S und Hg gereinigt. Dabei wird die Bedampfung über eine vorgegebene Zeitspanne fortgeführt. Da die Bedampfungsvorrichtung, auch als Destillationsreaktor zu bezeichnen, im wesentlich gasdicht ausgeführt ist, kann ein entsprechender Druck von beispielsweise 1,5 bar aufrechterhalten werden.

Der Dampf wird vom Destillationsreaktor über Leitungen einem Feinteile-Staub-Filter 9 zugeführt, in welchem die Brüden beispielsweise < 10 mg/Ncbm entstaubt werden. In einem Mischer 11 wird der Feinteilestaub granuliert, pelletiert, koaguliert oder dergleichen. So kann beispielsweise eine Mischung mit H₂O gegebenenfalls unter Zufügung von Bindern oder sonstigen Additiven erfolgen. Anschließend läßt sich das Mischungsprodukt wieder in den Kreislauf zurückführen, beispielsweise auf das Transportband 4. Die entstaubten Brüden werden einem Kondensator 10 zugeführt. Das Kondensat wird in einem Dreiphasenseparator 24 behandelt, in welchem Öle und Feststoffe (Schlamm) sowie Wasser voneinander getrennt werden. Die Öle und Feststoffe können entsorgt werden, während das Wasser nach einer weiteren Aufbereitung als Kesselspeisewasser im Kessel 7 zur Heißdampferzeugung verwendet wird und somit im Kreislauf verbleibt. Es wird darauf hingewiesen, daß anstelle des Dreiphasenseparators auch ein Purifikator mit nachgeschaltetem Clarifikator Verwendung finden kann

Zur Aufbereitung des separierten Wassers wird eine aus Ultrafiltration 25, Umkehrosmose 26 und thermischen Entgasung 27 bestehende Wasseraufbereitungsanlage verwendet, die salzfreies Speisewasser in Mischbettqualität erzeugt. Dies bedeutet als Richtwert eine Leitfähigkeit von 0,2µS/cm sowie weitestgehende Silikatfreiheit im Nachspeisewasser. Im Kesselwasser wird bis auf 50µS/cm aufgesalzt, so daß im Dampf ein Leitwert von 0,2µS/cm und ein Silikatgehalt von 0,02mg/l eingehalten werden. Die verwendete Aufbereitung mit Umkehrosmoseeinrichtung 26 stellt ein ideales Verfahren zur Einrichtung der angestrebten Wasserqualität dar.

Die vom Kondensator 10 mittels einer Vakuumpumpe abgesaugten Gase werden einem Adsorber 12 zugeführt. In diesem Adsorber, der beispielsweise eine Abluftreinigung mittels Aktivkohle durchführt, fallen flüchtige anorganische Bestandteile wie Schwefel, Chloride, Quecksilber, Arsen usw. an. Die flüchtigen organischen Stoffe werden nach Vermischung mit Frischluft im Brenner und der vorgeschalteten Brennkammer am Dampfkessel bei Temperaturen um 1200°C bzw. 1250°C voll ausgebrannt.

Die Kaminabluft bedarf praktisch keiner besonderen Reinigungsverfahren.

Bei dem gezeigten Ausführungsbeispiel entstehen keine weiteren Abgase aus der Gesamtanlage. Als einzige Abfälle bzw. Reststoffe entstehen, abgesehen von der beladenen Aktivkohle im Adsorber 12, keine Rückstände, die nicht in konzentriertester Form ausgeschleust werden. Damit ist eine Minimierung der Abfallstoffe erreichbar.

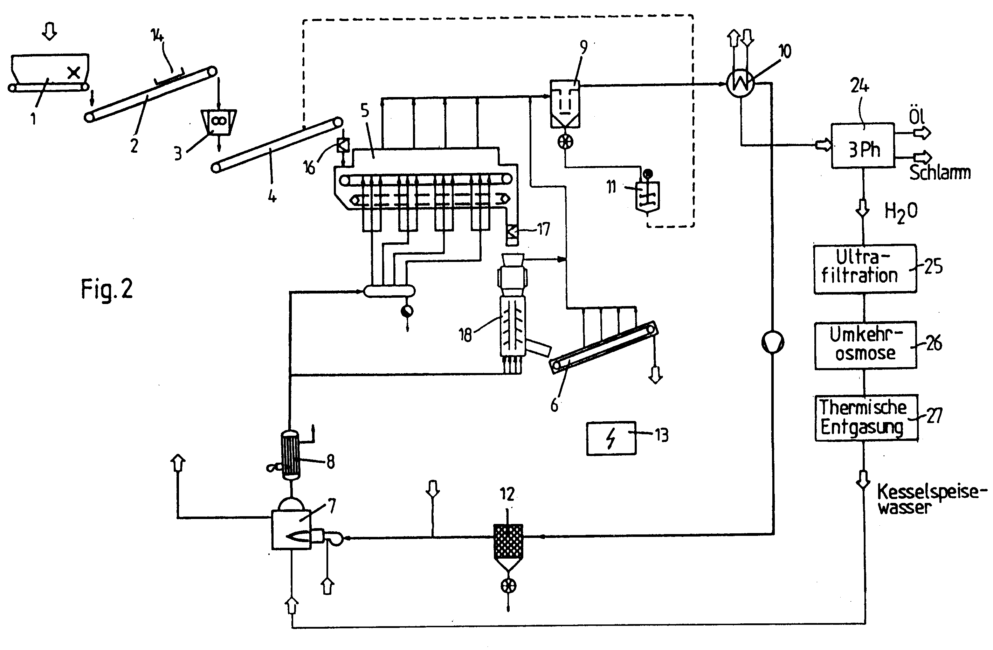

Bei dem in Fig. 2 gezeigten Ausführungsbeispiel handelt es sich um eine gegenüber der in Fig. 1 gezeigten Anlage modifizierten Anlage. Gleiche Elemente sind mit gleichen Bezugszeichen versehen. Im Zuführbereich wurde das Sieb 23 weggelassen, so daß das Magnetband 14 im Bereich des Transportbandes 2 gebildet ist. Auch wurde auf einen Elevator 15 verzichtet. Der wesentliche Unterschied gegenüber dem in Fig. 1 gezeigten Ausführungsbeispiel besteht darin, daß dem Destillationsreaktor 5 eine weitere Reaktorsäule 18 nachgeschaltet ist. In der Reaktorsäule, die im wesentlichen aus einem Reaktorgehäuse besteht, in dem ein Schadgasrohr angeordnet ist, findet eine Weiter- und/oder Nachbehandlung des zu reinigenden Gutes statt. Um das Schadgasrohr herum sind haubenartige Bleche angeordnet, so daß das zu reinigende Gut bis zum unten angeordneten Austrag über Bleche rieselt, während es im Gegenstrom von einem Behandlungsgut durchströmt wird. Dieses Gas sammelt sich mit den weiteren, dem zu reinigenden Gut entzogenen Stoffen, innerhalb der Hauben und wird über das Schadgasrohr abgeführt. Im übrigen entspricht die in Fig. 2 gezeigte Anlage vom Verfahrensablauf her der in Fig. 1 gezeigten Anlage.

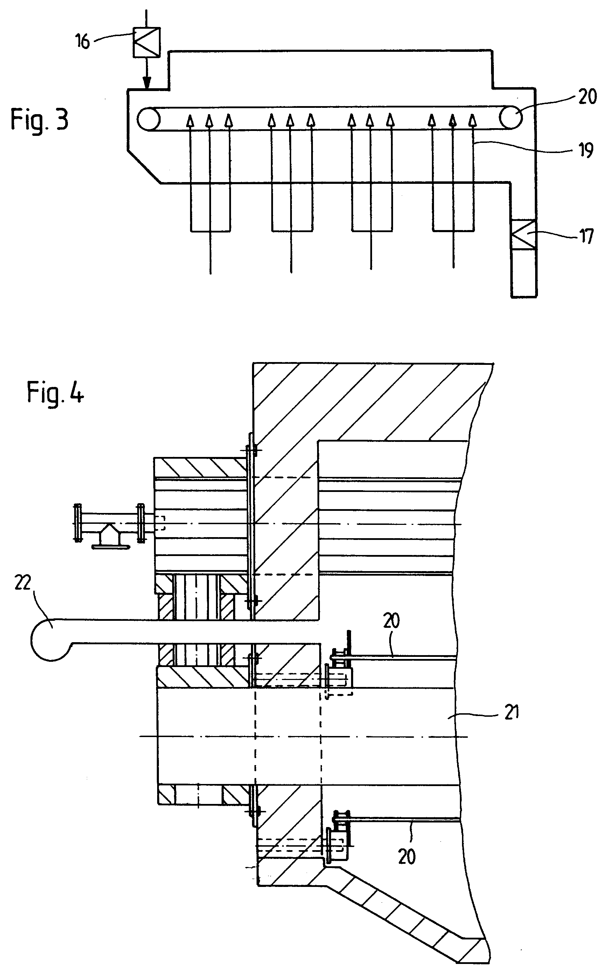

In Fig. 3 ist ein Destillationsreaktor 5 schematisch dargestellt. Der Destillationsreaktor 5 ist im wesentlichem in einem gasdichten Gehäuse, vorzugsweise aus Edelstahl angeordnet. Auf der Beschickungsseite ist eine Eingangsschleuse 16, auf der Ausbringseite eine Ausgangsschleuse 17 ausgebildet. Innerhalb des Gehäuses ist ein Destillationsband 20 angeordnet, welches dampfdurchlässig ist. Dabei handelt es sich beispielsweise um ein gelochtes Edelstahlband bzw. ein Metallgitter. Ein Düsensystem 19, welches zwischen Obertrum und Untertrum des Bandes 20 angeordnet ist, sorgt für eine flächendeckende Durchdampfung der auf das Band 20 aufgebrachten Reinigungsgutschicht. Der Dampf verläßt das Gehäuse nach oben. Ein Teil des Bedampfungssystems ist schematisch vergrößert in Fig. 4 gezeigt. Der Dampf wird über eine Kanal 21 zwischen Obertrum und Untertrum des Bandes 20 von der Seite her zugeführt. Er durchströmt flächendeckend das Obertrum und die darauf aufgebrachte Schicht von zu reinigendem Gut und wird über einen Absaugkanal 22 wieder aus dem Gehäuse abgesaugt und der beschriebenen weiteren Behandlung zugeführt. Unterhalb des Bandes 20 kann ein Transportband zum Auffangen von durchfallenden Reiningungsstoffbestandteilen angeordnet sein. Die Feinbestandteile können wieder in den Reinigungskreislauf zurückgeführt werden. Die Behandlungszeit einer Schicht innerhalb des Destillationsreaktors kann bis zu 60 min betragen. Der Dampf hat vorzugsweise eine Temperatur von 700°C bei einem Vorlaufdruck von 0,5 und 1,5 bar.

### Bezugszeichenliste:

- 1: Kastenbeschicker
- 2: Transportband
- 3: Brecher
- 4: Transportband
- 5: Destillationsreaktor/Bedampfungsvorrichtung
- 6: Transportband
- 7: Dampfkessel
- 8: Überhitzer
- 9: Filter
- 10: Kondensator
- 11: Mischer
- 12: Adsorber
- 13: Steueranlage
- 14: Magnetband
- 15: Elevator
- 16: Zuführschleuse
- 17: Ausbringschleuse
- 18: Reaktorsäule
- 19: Dampfdüsen
- 20: Destillationsband
- 21: Zuführkanal
- 22: Absaugkanal
- 23: Sieb
- 24: 3-Phasenseparator
- 25: Ultrafiltration
- 26: Umkehrosmose
- 27: Thermische Entgasung

## Patentansprüche

1. Verfahren zur thermischen Abtrennung von organischen und/oder anorganischen Schadstoffen aus kontaminiertem Behandlungsgut, wie Böden, Schlämmen, Walzenzunder und dgl., mit Heißgasen, die anschließend entstaubt, kondensiert und einer Kondensatreinigung unterzogen werden,
**dadurch gekennzeichnet**,
daß das Behandlungsgut auf einer gasdurchlässigen, kontinuierlich oder schrittweise vorwärts von einer Aufgabezone zu einer Entnahmezone bewegten Unterlage flächig in einer vorgegebenen Schichtstärke ausgebreitet wird, daß durch die Schicht des Behandlungsgutes ausschließlich Heißdampf mit einer Temperatur ≧ 700°C und einem Dampfdruck zwischen 0,5 und 1,5 bar derart hindurchgeführt wird, daß durch die die Heißdampfbehandlung überlagernde Bewegung des Behandlungsgutes dieses in der Aufgabezone zunächst getrocknet wird und sodann in der nachfolgenden Reaktionszone die Schadstoffe sukzessive mit ansteigender Temperatur des Behandlungsgutes über ihren Siedepunkt erhitzt, verdampft und mit den Heißdampfbrüden abgeführt werden, und daß schließlich die Brüden in an sich bekannter Weise entstaubt und kondensiert werden, wobei das Kondensat in einem Drei-Phasen-Separator in feste Rückstandsprodukte, Öle und eine wässrige Phase getrennt wird, die nach einer Wasseraufbereitung als Kesselspeisewasser zur Heißdampferzeugung verwendet wird.

2. Verfahren nach Anspruch 1, dadurch gekennzeichnet, daß die Behandlung mit Heißdampf von 700°C bei einem Druck von 1,5 bar durchgeführt wird, wobei die Schichtstärke zwischen 200mm und 500mm eingestellt wird.

3. Verfahren nach Anspruch 1 und 2, dadurch gekennzeichnet, daß der Heißdampf von unten nach oben durch die Schicht des Behandlungsgutes hindurchgeleitet wird und daß der durch die gasdurchlässige Unterlage fallende Feinstaub mittels eines parallelgeschalteten Förderbandes gesammelt und dem Prozeß vor der Aufgabezone wieder zugeführt wird.

4. Verfahren nach Anspruch 3, dadurch gekennzeichnet, daß die Feinteile vor der erneuten Einführung in den Behandlungsprozeß agglomeriert werden.

5. Verfahren nach einem der Ansprüche 1 bis 4, dadurch gekennzeichnet, daß der bei der Entstaubung der Heißdampfbrüden gewonnene Staub agglomeriert wird und dem Prozeß vor der Aufgabezone wieder zugeführt wird.

6. Verfahren nach einem der Ansprüche 1 bis 5, dadurch gekennzeichnet, daß die bei der Kondensation entstehende Vakuumluft einem Adsorber zugeführt wird und daß ein Teil dieser Luft als Verbrennungsluft verwendet wird.

7. Verfahren nach einem der Ansprüche 1 bis 6, dadurch gekennzeichnet, daß das durch thermische Behandlung gereinigte Behandlungsgut anschließend einer Nachbehandlung in einer Reaktorsäule mittels Prozeßmedien zugeführt wird.

8. Verfahren nach Anspruch 7, dadurch gekennzeichnet, daß die Reaktorsäule in einem parallelen Dampfkreislauf betrieben wird.

9. Verfahren nach einem der Ansprüche 1 bis 8, dadurch gekennzeichnet, daß die Wasseraufbereitung des Separatorwassers durch Ultrafiltration, Umkehrosmose und thermische Entgasung vorgenommen wird.

10. Vorrichtung zur Durchführung des Verfahrens nach einem der Ansprüche 1 bis 9, gekennzeichnet durch eine Beschickungseinheit (1 bis 4), eine Bedampfungseinheit (5), eine Ausbringeinheit (6) für das Behandlungsgut, einen Dampferzeuger (7, 8) und eine Brüdenreinigung (9 bis 12; 24 bis 27), wobei die Bedampfungseinheit (5) ein im wesentlichen gasdichtes Gehäuse mit einer Zuführschleuse und einer Ausbringschleuse umfaßt, zwischen denen ein gasdurchlässiges Transportband für das Behandlungsgut angeordnet ist, unter welchem über die gesamte Fläche verteilte Zuführdüsen für Heißdampf angeordnet sind.

11. Vorrichtung nach Anspruch 10, dadurch gekennzeichnet, daß unterhalb des Förderbandes für das Behandlungsgut ein zweites Förderband mit gegenläufiger Förderrichtung zum Auffangen und Austragen von Feinstmaterialien angeordnet ist, welche mittels eines Elevators (15) wieder der Aufgabezone der Bedampfungseinheit (5) zuführbar sind.

12. Vorrichtung nach Anspruch 10 und 11, dadurch gekennzeichnet, daß der Bedampfungseinheit (5) eine Reaktorsäule (18) für eine Nachbehandlung nachgeschaltet ist.

13. Vorrichtung nach einem der Ansprüche 10 bis 12, dadurch gekennzeichnet, daß die Beschickungseinheit (1 bis 4) einen Kastenbeschicker (1), einen Magnetabscheider (14) und einen Brecher (3) aufweist, der das Behandlungsgut auf eine Korngröße von maximal 30mm bricht.

14. Vorrichtung nach einem der Ansprüche 10 bis 13, dadurch gekennzeichnet, daß die Brüdenreinigung einen Drei-Phasen-Separator (24) zur Aufbereitung des Kondensats in feste Rückstandsprodukte, Öle und eine wässrige Phase aufweist, und daß zur Aufbereitung der wässrigen Phase zu Kesselspeisewasser eine Einrichtung zur Ultrafiltration, Umkehrosmose und thermischen Entgasung vorgesehen ist.
